# EUROPÄISCHE PATENTSCHRIFT

(11) **EP 1 740 625 B1**
(45) Veröffentlichungstag und Bekanntmachung des Hinweises auf die Patenterteilung: **12.09.2007**
(21) Anmeldenummer: 05759106.7
(22) Anmeldetag: 14.04.2005
(51) Int. Cl.: C08F 26/10, C08F 2/10, C21D 1/60, C09J 5/00

(54) **VERFAHREN ZUR HERSTELLUNG VON WÄSSRIGEN POLYVINYLLACTAM-DISPERSIONEN**
METHOD FOR PRODUCING AQUEOUS POLYVINYLLACTAM DISPERSIONS
PROCEDE DE PRODUCTION DE DISPERSIONS AQUEUSES DE LACTAME POLYVINYLIQUE

(30) Priorität: 16.04.2004 DE 102004019181
(43) Veröffentlichungstag der Anmeldung: 10.01.2007
(73) Patentinhaber: BASF Aktiengesellschaft, 67056 Ludwigshafen (DE)
(72) Erfinder: CHRISSTOFFELS, Lysander, 67117 Limburgerhof (DE); WIDMAIER, Ralf, 68167 Mannheim (DE); STEIN, Stefan, 55286 Wörrstadt (DE); TORRES LLOSA, Jose, Maria, 67071 Ludwigshafen (DE); GARCIA CASTRO, Ivette, 67067 Ludwigshafen (DE)
(86) Internationale Anmeldenummer: PCT/EP2005/003921
(87) Internationale Veröffentlichungsnummer: WO 2005/100416

(56) Entgegenhaltungen:
- WO-A-94/22953
- WO-A-98/14405
- WO-A-98/47953
- DE-A1- 4 342 281
- GB-A- 2 133 047
- US-A- 5 306 795
- US-A- 5 373 074

## Beschreibung

Gegenstand der vorliegenden Erfindung ist ein Verfahren zur Herstellung einer Wasser-in-Wasser-Dispersion von Polyvinyllactam mit einem K-Wert von ≥ 30 und ≤ 110 durch radikalisch initiierte Polymerisation wenigstens eines N-Vinyllactams der allgemeinen Formel I 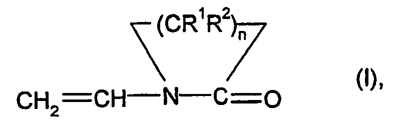 mit
- R¹, R²: unabhängig voneinander Wasserstoff und/oder C₁-C₈-Alkyl,
- n: gleich einer ganzen Zahl von 2 bis 8,
in einem wässrigen Reaktionsmedium,
welches dadurch gekennzeichnet ist, dass das zur Polymerisation eingesetzte wenigstens eine N-Vinyllactam I zu wenigstens 50 Gew.-% aus N-Vinyl-2-pyrrolidon (R¹ und R² gleich Wasserstoff, n gleich 3) besteht und die radikalisch initiierte Polymerisation des wenigstens einen N-Vinyllactams I in Gegenwart von
a) 1 bis 100 Gew.-% der Sättigungsmenge im wässrigen Reaktionsmedium wenigstens eines organischen oder anorganischen Salzes,
b) 0,1 bis 30 Gew.-% wenigstens eines Schutzkolloids, bezogen auf die Gesamtmenge des zur Polymerisation eingesetzten wenigstens einen N-Vinyllactams I, sowie
c) 0,01 bis 3 Gew.-% wenigstens eines Radikalinitiators, bezogen auf die Gesamtmenge des zur Polymerisation eingesetzten wenigstens einen N-Vinyllactams I
erfolgt, und dabei die Reaktionsbedingungen so gewählt werden, dass während der Polymerisationsreaktion wenigstens eine Teilmenge des wenigstens einen N-Vinyllactams I und des daraus durch Polymerisation gebildeten Polyvinyllactams im wässrigen Reaktionsmedium als separate Phase vorliegen.

Gegenstand vorliegender Erfindung ist ferner die Wasser-in-Wasser-Dispersion von Polyvinyllactam selbst sowie deren Verwendung als Komponente in Pharma- oder Kosmetikprodukten, in Klebstoffen oder Wärmeträgerflüssigkeiten sowie in Beschichtungs-, Verdicker-, Adsorber-, Bindemittel-, Waschmittel-, Kunststoff-, Keramik-, Kühlmittel-, Tinten- oder Pigmentformulierungen. Gegenstand vorliegender Erfindung ist darüber hinaus die Verwendung vorgenannter wässriger Polyvinyllactam-Dispersionen als Komponente im einem Metallquenchbad bzw. in Klebstoffformulierungen für Klebestifte.

Für die Herstellung von Polyvinyllactam-Verbindungen, insbesondere Poly-N-vinyl-2-pyrrolidon (PVP) ist von folgendem Stand der Technik auszugehen.

In der Schrift WO 91/03496 wird die Lösungspolymerisation mittels tert.-Amylperoxypivalat als Radikalstarter offenbart. Neben Copolymeren aus Maleinsäureanhydrid und Alkylvinylethern wird auch die Herstellung von PVP mit einem K-Wert von ca. 120 durch Polymerisation von N-Vinyl-2-pyrrolidon (VP) beschrieben. Der PVP-Gehalt der beispielhaft offenbarten hochviskosen wässrigen Lösung beträgt ca. 21 Gew.-%.

Die WO 94/18241 offenbart die Herstellung von PVP mit K-Werten im Bereich von 30 bis 150 in Form von hochviskosen wässrigen Lösungen durch VP-Polymerisation unter Verwendung eines speziellen Radikalstartersystems, bestehend aus wenigstens zwei Radikalstartern, deren 10-Stundenhalbwertszeittemperaturen sich um mehr als 5 °C unterscheiden.

Gegenstand der WO 94/22953 ist die Herstellung von PVP mit einem K-Wert von 15 bis 130 in Form von wässrigen Lösungen durch radikalische Polymerisation von VP oder dessen Oligomeren unter Verwendung des Radikalstarters 2,2'-Azobis(2-methylbutannitril).

Darüber hinaus sind weitere Verfahren zur Herstellung von PVP mit K-Werten ≤ 110 durch Lösungspolymerisation in wässrigem Medium vorbeschrieben und daher dem Fachmann geläufig (siehe hierzu beispielsweise die Schriften US-A 5338814, US-A 5362815, US-A 5373074, RO-A 90406, RO-A93230 sowie die amerikanische Offenlegungsschrift US 2002/22699 A1).

Nachteilig an diesen Verfahren ist, dass die Herstellung dieser mittel- bis hochmolekularen PVP-Polymerisate mittels Lösungspolymerisation in Abhängigkeit von den zu erzielenden PVP-Molekulargewichten ab bestimmten PVP-Gehalten zu hohen Viskositäten der PVP-Lösungen führt. Je höher das zu erzielende Molekulargewicht, desto niedriger ist der Polymerisatgehalt, welcher noch zu einer technisch handhabbaren Lösungsviskosität führt. Aufgrund der insbesondere bei den hochmolekularen PVP-Polymerisaten resultierenden schlechten Raum-Zeit-Ausbeuten ergeben sich hohe Produktionskosten. Als weiterer Nachteil der Verfahren des Standes der Technik sind die relativ hohen Anteile an ungelösten Gelpartikeln anzusehen, welche zu einer Vielzahl von Nachteilen sowohl im Produktionsprozess (längere Filtrations- und Abfüllzeiten) wie auch bei der späteren Anwendung der PVP-Polymerisaten (Inhomogenitäten der entsprechenden Formulierungen) führen. Ebenfalls nachteilig an den durch Verfahren des Standes der Technik allgemein zugänglichen wässrigen PVP-Lösungen ist, dass deren PVP-Feststoffgehalte relativ niedrig sind und sie daher für ihren Einsatz als Formulierungskomponente häufig zur Erhöhung des Feststoffgehaltes mit pulverförmigen PVP abgemischt werden müssen.

Aufgabe der vorliegenden Erfindung war es, ein verbessertes Polymerisationsverfahren für N-Vinyllactame, insbesondere N-Vinyl-2-pyrrolidon, zur Verfügung zu stellen, welches verbesserte Raum-Zeit-Ausbeuten aufweist und niedrigviskose wässrige Systeme mit höheren Polyvinyllactam-Gehalten bei gleichzeitig niedrigeren Gelgehalten zugänglich macht.

Dementsprechend wurde das eingangs definierte Verfahren gefunden.

Verfahren zur Herstellung von Wasser-in-Wasser-Polymerisatdispersionen durch radikalisch induzierte Polymerisation ethylenisch ungesättigter Verbindungen (Monomere) sind allgemein bekannt (siehe hierzu beispielsweise WO 98/31748, WO 98/54234, EP-A 630909, EP-A 984990 oder US-A 4380600).

Erfindungsgemäß wird wenigstens ein N-Vinyllactam der allgemeinen Formel I 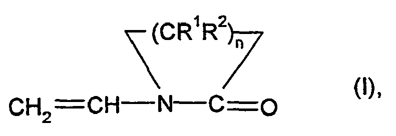 mit
- R¹, R²: unabhängig voneinander Wasserstoff und/oder C₁-C₈-Alkyl,
- n: gleich einer ganzen Zahl von 2 bis 8,
in einem wässrigen Reaktionsmedium zur Polymerisation eingesetzt, wobei das wenigstens eine N-Vinyllactam I zu wenigstens 50 Gew.-% aus N-Vinyl-2-pyrrolidon (R¹ und R² gleich Wasserstoff, n gleich 3) besteht.

Dabei können R¹ und R² unabhängig voneinander Wasserstoff und/oder C₁-C₈-Alkyl, beispielsweise Methyl, Ethyl, n-Propyl, iso-Propyl, n-Butyl, iso-Butyl, tert.-Butyl sowie n-Pentyl, n-Hexyl, n-Heptyl oder n-Octyl und deren isomeren Alkylgruppen sein. Als R¹ und R² bevorzugt sind Wasserstoff und Methyl. Insbesondere bevorzugt ist Wasserstoff. Häufig enthält das N-Vinyllactam I keine oder insgesamt lediglich eine Methylgruppe.

Erfindungsgemäß steht n für eine ganze Zahl von 2 bis 8, häufig für 3, 4, 5, 6 und 7. Insbesondere steht n für 3 und 5.

Beispiele für erfindungsgemäß vorteilhaft einsetzbare N-Vinyllactame I sind die N-Vinylderivate nachfolgender Lactame: 2-Pyrrolidon, 2-Piperidon, ε-Caprolactam und deren Alkylderivate, wie beispielsweise 3-Methyl-2-pyrrolidon, 4-Methyl-2-pyrrolidon, 5-Methyl-2-pyrrolidon, 3-Ethyl-2-pyrrolidon, 3-Propyl-2-pyrrolidon, 3-Butyl-2-pyrrolidon, 3,3-Dimethyl-2-pyrrolidon, 3,5-Dimethyl-2-pyrrolidon, 5,5-Dimethyl-2-pyrrolidon, 3,3,5-Trimethyl-2-pyrrolidon, 5-Methyl-5-ethyl-2-pyrrolidon, 3,4,5-Trimethyl-2-pyrrolidon, 3-Methyl-2-piperidon, 4-Methyl-2-piperidon, 5-Methyl-2-piperidon, 6-Methyl-2-piperidon, 6-Ethyl-2-piperidon, 3,5-Dimethyl-2-piperidon, 4,4-Dimethyl-2-piperidon, 3-Methyl-ε-caprolactam, 4-Methyl-ε-caprolactam, 5-Methyl-ε-caprolactam, 6-Methyl-ε-caprolactam, 7-Methyl-ε-caprolactam, 3-Ethyl-ε-caprolactam, 3-Propyl-ε-caprolactam, 3-Butyl-ε-caprolactam, 3,3-Dimethyl-ε-caprolactam oder 7,7-Dimethyl-ε-caprolactam. Selbstverständlich können auch Gemische vorgenannter N-Vinyllactame I eingesetzt werden.

Das zu polymerisierende wenigstens eine N-Vinyllactam I besteht zu wenigstens 50 Gew.-% aus VP. Oft besteht das wenigstens eine N-Vinyllactam I zu ≥ 60 Gew.-%, ≥ 70 Gew.-%, ≥ 80 Gew.-%, ≥ 90 Gew.-% oder sogar zu 100 Gew.-% und alle Werte dazwischen aus VP. Häufig wird ausschließlich VP zur Polymerisation eingesetzt.

Erfindungsgemäß kann die Gesamtmenge an N-Vinyllactam I im Reaktionsmedium vorgelegt werden. Es ist aber auch möglich, gegebenenfalls lediglich eine Teilmenge des wenigstens einen N-Vinyllactams I im Reaktionsmedium vorzulegen und die gegebenenfalls verbliebene Restmenge bzw. die Gesamtmenge des N-Vinyllactams I dem Reaktionsmedium unter Polymerisationsbedingungen zuzuführen.

Das erfindungsgemäße Verfahren wird in Gegenwart von 1 bis 100 Gew.-% der Sättigungsmenge im wässrigen Reaktionsmedium wenigstens eines organischen oder anorganischen Salzes durchgeführt. Dabei hat das wenigstens eine Salz die Funktion, dass die Löslichkeit sowohl von N-Vinyllactam I als auch vom gebildeten Polyvinyllactam herabgesetzt wird und so wenigstens eine Teilmenge des zur Polymerisation eingesetzten N-Vinyllactams I und des daraus durch Polymerisation gebildeten Polyvinyllactams im wässrigen Reaktionsmedium unter Polymerisationsbedingungen als separate heterogene Phase vorliegen.

Die Auswahl des entsprechenden Salzes hängt im wesentlichen von dem eingesetzten N-Vinyllactam I, dem zu erzeugenden Polyvinyllactam und dem eingesetzten Schutzkolloid, sowie ggf. weiterer Hilfsmittel ab. Die Auswahl von Art und Menge des Salzes erfolgt dergestalt, dass unter Polymerisationsbedingungen (Temperatur, Druck, ggf. in Anwesenheit von Hilfsstoffen etc.) sowohl wenigstens eine Teilmenge des zur Polymerisation eingesetzten N-Vinyllactams I wie auch wenigstens eine Teilmenge des gebildeten Polyvinyllactams in der Salzlösung als separate heterogene Phase vorliegen. Erfindungsgemäß vorteilhaft ist es, je höher der als separate Phase vorliegende Anteil an N-Vinyllactam I und Polyvinyllactam ist. Günstig ist es, wenn unter Polymerisationsbedingungen ≥ 60 Gew.-%, häufig ≥ 70 Gew.-% und oft ≥ 80 Gew.-% des wenigstens einen nichtumgesetzten N-Vinyllactams I sowie ≥ 70 Gew.-%, häufig ≥ 80 Gew.-% und oft ≥ 90 Gew.-% des gebildeten Polyvinyllactams im wässrigen Reaktionsmedium als separate heterogene Phase vorliegen.

Salze, die beispielsweise für das erfindungsgemäße Verfahren verwendet werden können, sind ausführlich in den Schriften WO 98/14405 und WO 00/20470 beschrieben, auf die hiermit ausdrücklich Bezug genommen wird.

Geeignete Salze sind anorganische Salze, bevorzugt kosmotropische Salze, wie Fluoride, Chloride, Sulfate, Phosphate oder Hydrogenphosphate von Metallionen oder Ammoniumionen. Typische Vertreter sind Natriumsulfat, Kaliumsulfat, Ammoniumsulfat, Magnesiumsulfat, Aluminiumsulfat, Natriumchlorid, Kalziumchlorid, Natriumdihydrogenphosphat, Diammomiumhydrogenphosphat, Dikaliumhydrogenphosphat, Kalziumphosphat, Natriumcitrat und Eisensulfat.

Chaotrope Salze, wie beispielsweise Thiocyanate, Perchlorate, Chlorate, Nitrate, Bromide und Iodide können ebenfalls verwendet werden. Typische Vertreter sind Kalziumnitrat, Natriumnitrat, Ammoniumnitrat, Aluminiumnitrat, Natriumthiocyanat und Natriumiodid.

Vorteilhaft werden Salze organischer C₁- bis C₁₅-Carbonsäuren, insbesondere die Alkalisalze, beispielsweise Natrium- oder Kaliumsalze oder Ammoniumsalze ein-, zwei- oder mehrbasiger organischer C₁- bis C₁₂-Carbonsäuren, wie beispielsweise Ameisensäure, Essigsäure, Zitronensäure, Oxalsäure, Malonsäure, Bernsteinsäure, Adipinsäure, Korksäure, Phthalsäure, Agaricinsäure, Trimesinsäure, 1,2,3-Propantricarbonsäure sowie 1,4-, 2,3- oder 2,6-Naphthalindicarbonsäure eingesetzt.

Diese Salze können einzeln oder als Mischungen von zwei oder mehr Salzen eingesetzt werden. Oftmals ist eine Mischung mehrerer Salze wirksamer als ein Salz allein, bezogen auf die eingesetzte Menge.

Die Salze werden in einer Menge zugesetzt, die 1 bis 100 Gew.-%, bevorzugt 10 bis 90 Gew.-% und besonders bevorzugt 15 bis 75 Gew.-% der Sättigungsmenge im wässrigen Reaktionsmedium unter Reaktionsbedingungen beträgt.

Unter 100 Gew.-% Sättigungsmenge im Reaktionsmedium ist diejenige Menge an Salz oder Salzen zu verstehen, die sich im wässrigen Reaktionsmedium des eingesetzten N-Vinyllactams I in Anwesenheit des wenigstens einen Schutzkolloids sowie ggf. weiteren Hilfsstoffen bei der verwendeten Reaktionstemperatur gerade noch lösen ohne zu präzipitieren.

Erfindungsgemäß kann die Gesamtmenge des wenigstens einen Salzes im Reaktionsmedium vorgelegt werden. Es ist aber auch möglich, gegebenenfalls lediglich eine Teilmenge des wenigstens einen Salzes im Reaktionsmedium vorzulegen und die gegebenenfalls verbliebene Restmenge bzw. die Gesamtmenge des wenigstens einen Salzes dem Reaktionsmedium unter Polymerisationsbedingungen zuzuführen. Dabei ist allerdings darauf zu achten, dass sowohl das zur Polymerisation eingesetzte N-Vinyllactam I (bis zu dessen Abreaktion) wie auch das gebildete Polyvinyllactam unter Reaktionsbedingungen im wässrigen Reaktionsmedium stets als separate heterogene Phase vorliegen.

Das erfindungsgemäße Verfahren erfolgt in Gegenwart von 0,1 bis 30 Gew.-%, oft von 0,5 bis 20 Gew.-% und häufig von 1 bis 10 Gew.-% wenigstens eines Schutzkolloids, jeweils bezogen auf die Gesamtmenge des zur Polymerisation eingesetzten wenigstens einen N-Vinyllactams I.

Unter einem Schutzkolloid sollen im Rahmen dieser Schrift alle Verbindungen verstanden werden, deren mittleres Molekulargewicht > 1000 g/mol beträgt sowie gut wasserlöslich und darüber hinaus in der Lage sind, die Tröpfchen des Vinyllactams I sowie insbesondere des gebildeten Polyvinyllactams im wässrigen Dispergiermedium als heterogen disperse Phase zu stabilisieren. Häufig beträgt das mittlere Molekulargewicht 1500 bis 3000000 g/mol oder 10000 bis 2000000 g/mol und oft 30000 bis 1500000, jeweils bestimmt mittels üblicher Verfahren der Gelpermeationschromatographie. Als Schutzkolloide können neutrale, anionische und/oder kationische Schutzkolloide verwendet werden.

Dabei sollen im Rahmen dieser Schrift unter einem anionischen Schutzkolloid alle Verbindungen mit einem mittleren Molekulargewicht > 1000 g/mol verstanden werden, deren dispergierend wirkende Molekülstruktur wenigstens eine anionische Gruppe, beispielsweise eine Sulfonsäure- oder Carbonsäuregruppe sowie deren entsprechende Salze, trägt.

Dabei kommen als anionische Schutzkolloide insbesondere Homo- und Copolymerisate folgender Monomerer in Betracht: Acrylsäure, Methacrylsäure, Crotonsäure, Ethylacrylsäure, Itakonsäure, 2-Acrylamido-2-methylpropansulfonsäure, Vinylsulfonsäure, Vinylschwefelsäure, Vinylphosphorsäure, 10-Undecensäure, 4-Pentensäure, Zimtsäure, Maleinsäure, Maleinsäureanhydrid, Fumarsäure, 3-Butensäure, 5-Hexensäure, 6-Heptensäure, 7-Octensäure, Citraconsäure, Mesaconsäure, Styrolsulfonsäure, Styrolschwefelsäure, Acrylsäure-(3-sulfopropyl)-ester, Itakonsäure-bis-(3-sulfopropyl)-ester, Methacrylsäure-(3-sulfopropyl)-ester, 3-Allyloxy-2-hydroxypropan-1-sulfonsäure, 2-Acrylamido-2-methylethan-sulfonsäure, Acrylsäure-(2-sulfoethyl)ester, Itakonsäure-bis-(2-sulfoethyl)-ester, Methacrylsäure-(2-sulfoethyl)-ester, Methacrylsäure-(3-sulfopropyl)-ester, 3-Allyloxy-2-hydroxypropan-1-sulfonsäure, 3-Allyloxy-2-hydroxyethan-1-sulfonsäure sowie deren Alkali- und Ammoniumsalze, insbesondere deren Natrium- und Kaliumsalze.

Neben den vorgenannten säuregruppenhaltigen Monomeren können die polymeren anionischen Schutzkolloide in Form ihrer Copolymerisate auch noch folgende neutrale Monomere in einpolymerisierter Form enthalten: Ethylen, Isobuten, N-Vinylformamid, VP, N-Vinylcaprolactam, N-Vinylacetamind, N-Vinylcarbazol, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ether aus Vinylalkohol und 1 bis 18 C-Atome aufweisenden Monoalkoholen, wie beispielsweise Methylvinylether, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie C₄₋₈-konjugierte Diene, wie 1,3-Butadien (Butadien) und Isopren. Die vorgenannten Monomere bilden in der Regel in den polymeren anionischen Schutzkolloiden die Hilfsmonomeren, die, bezogen auf die Gesamtmonomerenmenge, einen Anteil von weniger als 80 Gew.-%, häufig weniger als 50 Gew.-% und bevorzugt weniger als 30 Gew.-% auf sich vereinen. Häufig enthalten die polymeren anionischen Schutzkolloide keine der vorgenannten Monomeren in einpolymerisierter Form.

Im Rahmen dieser Schrift sollen unter einem kationischen Schutzkolloid alle Verbindungen mit einem mittleren Molekulargewicht > 1000 g/mol verstanden werden, deren dispergierend wirkende Molekülstruktur wenigstens eine kationische Gruppe, beispielsweise eine protonierte oder alkylierte Stickstoff-enthaltende Gruppe, trägt.

Dabei kommen als kationische Schutzkolloide insbesondere Homo- und Copolymerisate folgender am Stickstoff protonierter oder alkylierter Monomerer in Betracht: 1-Vinylimidazol, 2-Vinylimidazol, 2-Vinylpyridin, 4-Vinylpyridin, 2-Methyl-5-vinylpyridin, Dialkylaminoalkylacrylate, Dialkylaminoalkylmethacrylate, Dialkylaminoalkylacrylamide, Dialkylaminoalkylmethacrylamide, 3-Aminopropylvinylether, Vinylamine oder Allylamine. Die Alkylierung erfolgt durch dem Fachmann bekannte Verfahren, beispielsweise durch Reaktion mit Dimethylsulfat, Diethylsulfat oder Methylchlorid. Selbstverständlich ist es auch möglich, die Alkylierung mittels vorgenannter Reagenzien auf der Stufe des Polymers durchzuführen.

Neben den vorgenannten am Stickstoff protonierten oder alkylierten Monomeren können die polymeren kationischen Schutzkolloide in Form ihrer Copolymerisate auch noch vorgenannte neutrale Monomere in einpolymerisierter Form enthalten. Die neutralen Monomere bilden in der Regel in den kationischen Schutzkolloiden die Hilfsmonomere, die, bezogen auf die Gesamtmonomerenmenge, einen Anteil von weniger als 80 Gew.-%, häufig weniger als 50 Gew.-% und bevorzugt weniger als 30 Gew.-% auf sich vereinen. Häufig enthalten die polymeren kationischen Schutzkolloide keine neutrale Monomeren in einpolymerisierter Form.

Selbstverständlich ist es auch möglich, dass die polymeren Schutzkolloide sowohl Sulfonsäure- und/oder Carbonsäuregruppen wie auch am Stickstoff protonierte und/oder alkylierte Gruppen enthalten. Weisen die polymeren Schutzkolloide dabei mehr Sulfonsäure- und/oder Carbonsäuregruppen auf als am Stickstoff protonierte und/oder alkylierte Gruppen, so sind sie den anionischen polymeren Schutzkolloiden zuzurechnen. Weisen die polymeren Schutzkolloide jedoch mehr am Stickstoff protonierte und/oder alkylierte Gruppen auf als Sulfonsäure- und/oder Carbonsäuregruppen, so sind sie den kationischen polymeren Schutzkolloiden zuzurechnen.

Neutrale Schutzkolloide enthalten weder Sulfonsäure- bzw. Carbonsäuregruppen, noch an einem Stickstoffatom protonierte oder alkylierte funktionelle Gruppen. Beispiele für neutrale Schutzkolloide sind Polyvinylalkohole, Polyalkylenglykole, Cellulose-, Stärke- oder Gelatinederivate sowie Polyvinylformamid, PVP, Polyacrylamid, Polymethacrylamid, Polyhydroxyalkylacrylat, Polyhydroxyalkylmethacrylat.

Neutrale, anionische und/oder kationische Schutzkolloide sind dem Fachmann prinzipiell bekannt. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Die gewichtsmittleren Molekulargewichte der polymeren Schutzkolloide liegen bevorzugt im Bereich von 20000 bis 1500000 g/mol, häufig im Bereich von 30000 bis 1000000 g/mol und oft im Bereich von 40000 bis 700000 g/mol, jeweils bestimmt mittels üblicher Verfahren der Gelpermeationschromatographie.

Von Bedeutung ist, dass die Schutzkolloide unter Reaktionsbedingungen im tatsächlich eingesetzten Mengenbereich von 0,1 bis 30 Gew.-%, bezogen auf die Gesamtmenge des zur Polymerisation eingesetzten wenigstens einen N-Vinyllactams I, vollständig im wässrigen Reaktionsmedium löslich sind und dabei die als dispers separate Phase vorliegenden N-Vinyllactam- sowie insbesondere die gebildeten Polyvinyllactamtröpfchen zu stabilisieren vermögen.

Von Bedeutung ist ferner, dass die anionischen oder kationischen Schutzkolloide optional auch in Kombination mit neutralen Schutzkolloiden eingesetzt werden können. Dabei ist allerdings der Gewichtsanteil an optional eingesetzten neutralen Schutzkolloiden in der Regel geringer als der Gewichtsanteil an kationischen und/oder anionischen Schutzkolloiden und beträgt oft ≤ 5 Gew.-%, ≤ 3 Gew.-% oder ≤ 1 Gew.-%, jeweils bezogen auf die Gesamtmenge des zur Polymerisation eingesetzten wenigstens einen N-Vinyllactams I.

Bevorzugt werden anionische oder kationische polymere Schutzkolloide eingesetzt.

Erfindungsgemäß kann die Gesamtmenge des wenigstens einen Schutzkolloids im Reaktionsmedium vorgelegt werden. Es ist aber auch möglich, gegebenenfalls lediglich eine Teilmenge des wenigstens einen Schutzkolloids im Reaktionsmedium vorzulegen und die gegebenenfalls verbliebene Restmenge bzw. die Gesamtmenge des wenigstens einen Schutzkolloids dem Reaktionsmedium während der Polymerisation unter Polymerisationsbedingungen zuzuführen.

Als Initiatoren für die radikalische Polymerisation können dem Fachmann geläufige wasserlösliche und wasserunlösliche Peroxo- und/oder Azo-Verbindungen eingesetzt werden, wie beispielsweise Alkali- oder Ammoniumperoxodisulfate, Wasserstoffperoxid, Dibenzoylperoxid, tert.-Butylperpivalat, 2,2'-Azobis-(2,4-dimethylvaleronitril), tert.-Butylperoxineodecanoat, tert.-Butylper-2-ethylhexanoat, Di-tert.-butylperoxid, tert.-Butylhydroperoxid, Azo-bis-isobutyronitril, Azo-bis-(2-amidinopropan)dihydrochlorid, 2,2'-Azo-bis-(2-methylpropionamidin)dihydrochlorid (V-50 der Fa. Wako Chemicals GmbH, Neuss) oder 2,2'-Azo-bis-(2-methylbutyronitril). Geeignet sind auch Radikalinitiatormischungen oder Redoxinitiatoren, wie z.B. Ascorbinsäure/Eisen(II)sulfat/Natriumperoxodisulfat, tert.-Butylhydroperoxid/Natriumdisulfit, tert.-Butylhydroperoxid/Natriumhydroxymethansulfonat. Die Menge des wenigstens einen Radikalinitiators beträgt 0,01 bis 3, häufig 0,05 bis 1,5 und oft 0,05 bis 1 Gew.-%, jeweils bezogen auf die Gesamtmenge des zur Polymerisation eingesetzten wenigstens einen N-Vinyllactams I.

Durch die Mitverwendung von Redox-Coinitiatoren, beispielsweise Benzoin, Dimethylanilin sowie organisch löslicher Komplexe und Salze von Schwermetallen, wie Kupfer, Kobalt, Mangan, Nickel und Chrom oder insbesondere Eisen, können die Halbwertzeiten der genannten Peroxide, besonders der Hydroperoxide, verringert werden, so dass beispielsweise tert.-Buthylhydroperoxid in Gegenwart von 5 ppm Kupfer-IIacetylacetonat bereits bei 100 °C wirksam ist.

Bevorzugt werden gut wasserlösliche Azoinitiatoren, wie beispielsweise 2,2'-Azo-bis-(2-methylpropionamidin)dihydrochlorid eingesetzt.

Die Polymerisationsreaktion wird mit Hilfe von in Radikale zerfallende Polymerisationsinitiatoren gestartet. Es können sämtliche Initiatoren eingesetzt werden, die für die Polymerisation der N-Vinyllactame I bekannt sind. Geeignet sind beispielsweise in Radikale zerfallende Initiatoren, die bei den jeweils gewählten Temperaturen Halbwertzeiten von weniger als 3 Stunden besitzen. Falls die Polymerisation bei unterschiedlichen Temperaturen durchgeführt wird, indem man die N-Vinyllactame I zunächst bei einer niedrigeren Temperatur anpolymerisiert und anschließend bei einer deutlich höheren Temperatur auspolymerisiert, so verwendet man zweckmäßigerweise mindestens zwei unterschiedliche Initiatoren, die in dem jeweils gewählten Temperaturbereich eine ausreichende Zerfallsgeschwindigkeit haben.

Die Polymerisation wird üblicherweise bei Temperaturen zwischen 20 und 100 °C, bevorzugt zwischen 30 und 95 °C bzw. 50 und 90 °C durchgeführt. Häufig erfolgt die Polymerisationsreaktion unter Atmosphärendruck (1 bar absolut) oder, wenn die Polymerisation in einem geschlossenen System durchgeführt wird, unter dem sich einstellenden Eigendruck. In der Regel erfolgt die Polymerisationsreaktion unter Sauerstoffausschluss, beispielsweise unter Stickstoffatmosphäre.

Zur Herstellung der erfindungsgemäßen wässrigen Polyvinyllactam-Dispersionen ist es beim Einsatz anionischer polymerer Dispergiermittel häufig günstig, wenn die Radikalinitiatormenge ≥ 0,01 bis ≤ 3 Gew.-% beträgt und die Polymerisationstemperatur im Bereich von > 70 bis ≤ 95 °C, oft im Bereich ≥ 75 bis ≤ 90 °C liegt, während im Polymerisationstemperaturbereich von ≥ 40 bis ≤ 70 °C, oder im Bereich ≥ 50 bis ≤ 65 °C die Radikalinitiatormenge ≥ 0,3 bis ≤ 3 Gew.-%, jeweils bezogen auf die Gesamtmenge des N-Vinyllactams I, beträgt. Bei Verwendung kationischer polymerer Dispergiermittel beträgt die Radikalinitiatormenge im gesamten Temperturbereich von ≥ 40 bis ≤ 100 °C, bevorzugt im Bereich ≥ 50 bis ≤ 85 °C ≥ 0,01 bis ≤ 3 Gew.-%, oft ≥ 0,05 bis ≤ 1,5 Gew.-% und häufig ≥ 0,1 bis ≤ 1 Gew.-%, jeweils bezogen auf die Gesamtmenge des N-Vinyllactams I.

Die Polymerisation kann gegebenenfalls auch in Gegenwart von Molekulargewichtsreglern durchgeführt werden, um das Molekulargewicht der Polymerisate gezielt einzustellen. Geeignete Polymerisationsregler sind beispielsweise 2-Mercaptoethanole, Mercaptopropanole, Mercaptobutanole, Thioglykolsäure, N-Dodecylmercaptan, tert.-Dodecylmercaptan, Thiophenol, Mercaptopropionsäure, Isopropanol, Allylalkohol und Acetaldehyd. Die Molekulargewichtsregler werden, bezogen auf die eingesetzten Vinyllactamen I, in einer Menge von 0 bis 10, oder 0,1 bis 5 Gew.-%, oder 0,1 bis 2 Gew.-%, eingesetzt. Molekulargewichtsregler werden häufig bei der Herstellung von Polyvinyllactamen mit einem K-Wert < 60 eingesetzt. Die Art und die Menge der gegebenenfalls einzusetzenden Molekulargewichtsregler sind dem Fachmann geläufig oder kann von diesem in einfachen Vorversuchen ermittelt werden.

Das erfindungsgemäße Verfahren wird häufig in Anwesenheit von Puffersubstanzen durchgeführt, welche die Hydrolyse der N-Vinyllactame I, insbesondere bei einem pH-Wert < 6 unterdrücken sollen. Als Puffersubstanzen werden beispielsweise Natriumbicarbonat oder Natriumpyrophosphat, sowie weitere dem Fachmann geläufige Verbindungen verwendet. Bezogen auf das wässrige Reaktionsmedium beträgt deren Gehalt häufig 0,01 bis 2 Gew.-%.

Der pH-Wert des wässrigen Reaktionsmediums liegt in der Regel im Bereich von 6 bis 11, wobei jedoch ein pH-Wert ≥ 6,5 und ≤ 10 (jeweils gemessen bei 20 bis 25 °C) bevorzugt ist.

Daneben kann das wässrige Reaktionsmedium noch weitere übliche Hilfsstoffe, wie beispielsweise Biozide, Viskositätsregler oder Entschäumer enthalten.

Das erfindungsgemäße Verfahren erfolgt in der Regel dergestalt, dass zur Polymerisation ≥ 20 Gew.-%, oft ≥ 30 Gew.-% und häufig ≥ 40 Gew.-% und oft ≥ 50 Gew.-% des wenigstens einen N-Vinyllactams I, bezogen auf die Gesamtmenge der resultierenden wässrigen Polyvinyllactam-Dispersion eingesetzt werden.

Wesentlich ist, dass die Gesamtmenge des wenigstens einen N-Vinyllactams I im erfindungsgemäßen Verfahren bis zu einem Umsatz von ≥ 90 Gew.-%, oft ≥ 95 Gew.-% oder häufig ≥ 98 Gew.-% polymerisiert wird.

Das erfindungsgemäße Verfahren kann entweder nach der sogenannten Batchfahrweise unter Vorlage der Gesamtmenge des wenigstens einen N-Vinyllactams I oder nach der sogenannten Zulauffahrweise erfolgen.

Erfolgt die Polymerisation in Batchfahrweise, erfolgt die Vorlage aller Komponenten bis auf den Radikalinitiator im Polymerisationsreaktor. Anschließend wird das wässrige Polymerisationsgemisch unter Rühren auf Polymerisationstemperatur aufgeheizt und danach der Radikalinitiator diskontinuierlich oder kontinuierlich zugegeben.

In einer bevorzugten Ausführungsform wird das erfindungsgemäße Verfahren mittels Zulauffahrweise durchgeführt. Dabei werden einzelne oder alle Reaktionskomponenten ganz oder teilweise, absatzweise oder kontinuierlich, gemeinsam oder in getrennten Zuläufen dem wässrigen Reaktionsmedium zudosiert.

Vorteilhaft wird wenigstens eine Teilmenge des wenigstens einen organischen oder anorganischen Salzes und des wenigstens einen Schutzkolloids sowie gegebenenfalls eine Teilmenge des wenigstens einen Radikalinitiators und/oder des wenigstens einen N-Vinyllactams I im wässrigen Reaktionsmedium unter Rühren vorgelegt und unter Polymerisationsbedingungen die gegebenenfalls verbliebenen Restmengen des wenigstens einen organischen oder anorganischen Salzes und des wenigstens einen Schutzkolloids sowie die Gesamtmenge bzw. gegebenenfalls verbliebene Restmenge des wenigstens einen Radikalinitiators und/oder des wenigstens einen N-Vinyllactams I diskontinuierlich oder bevorzugt kontinuierlich zudosiert.

Die bei der Polymerisation erhaltenen Wasser-in-Wasser-Dispersionen können im Anschluss an den Polymerisationsprozess einer physikalischen oder chemischen Nachbehandlung unterworfen werden.

Hierzu werden beispielsweise dem Polymerisationsgemisch zur Vervollständigung der Polymerisation unter Polymerisationsbedingungen zusätzlich 0,05 bis 1,5 Gew.-%, häufig 0,1 bis 1 Gew-% und oft 0,2 bis 0,8 Gew.%, jeweils bezogen auf die Gesamtmenge des zur Polymerisation eingesetzten wenigstens einen N-Vinyllactams I, wenigstens eines der vorgenannten Radikalinitiatoren diskontinuierlich oder kontinuierlich zudosiert. Vorteilhaft wird dem Polymerisationsgemisch zur Vervollständigung der Polymerisation die Gesamtmenge des Radikalinitiators unter Polymerisationsbedingungen diskontinuierlich in einer Charge zugegeben.

Häufig wird zur Entfernung leichtflüchtiger organischer Bestandteile im Anschluss an die eigentliche Polymerisationsreaktion eine Nachbehandlung der erhaltenen Wasser-in-Wasser-Dispersion mittels Wasserdampf- und/oder Stickstoffstrippung durchgeführt. Verfahren zur Wasserdampf- und/oder Stickstoffstrippung sind dem Fachmann geläufig.

Die erhaltenen Wasser-in-Wasser-Dispersionen sind üblicherweise milchig weiß und haben bei 25 °C eine Viskosität von 5 bis 90000 mPas, oft von 10 bis 60000 mPas und oft von 15 bis 30000 mPas, jeweils gemessen nach der Brookfield-Methode, Spindel 4, 10 Umdrehungen pro Minute.

Die durch das erfindungsgemäße Verfahren zugänglichen Polyvinyllactame weisen K-Werte ≥ 30 und ≤ 110, gemessen nach Fikentscher auf. Die gewichtsmittleren Molekulargewichte der erfindungsgemäß zugänglichen Polyvinyllactame liegen im Bereich von 15000 bis 3000000 g/mol, häufig im Bereich von 25000 bis 2800000 g/mol und oft im Bereich von 30000 bis 2400000 g/mol, jeweils bestimmt mittels üblicher Verfahren der Gelpermeationschromatographie.

Als K-Werte sollen im Rahmen dieser Schrift generell die nach Fikentscher, Cellulosechemie, Bd. 13, Seiten 58 bis 64 (1932) bei 25 °C in 5 gew.-%iger wässriger Kochsalzlösung gemessenen Werte verstanden werden. Die Konzentration des zu messenden Polyvinyllactams in vorgenannter Kochsalzlösung beträgt dabei jeweils 0,1 Gew.-Teile [g] pro 100 Volumenteilen [ml] 5 gew.-%iger wässriger Kochsalzlösung.

Die erfindungsgemäß zugänglichen wässrigen Polyvinyllactam-Dispersionen können direkt in den Handel gebracht werden. Es ist aber auch möglich, diese Dispersionen mittels oxidierenden oder reduzierenden Reagenzien, Adsorptionsverfahren, wie die Adsorption von Verunreinigung an ausgewählten Medien, beispielsweise an Aktivkohle oder mittels Ultrafiltrationsverfahren von möglicherweise störenden Nebenkomponenten zu befreien. Die erfindungsgemäß zugänglichen wässrigen Polyvinyllactam-Dispersionen lassen sich aber auch durch geeignete Trockenverfahren, wie Sprüh-, Gefrier- oder Walzentrocknung, gegebenenfalls unter Verwendung geeigneter Hilfsmittel, wie beispielsweise Sprühtrocknungshilfsmittel oder Antibackmittel, in die entsprechenden Polyvinyllactam-Pulver überführen.

Von Bedeutung ist, dass durch das erfindungsgemäße Verfahren wässrige Polyvinyllactam-Dispersionen zugänglich sind, deren Polyvinyllactam-Gehalt, bei gleicher Viskosität und gleichen K-Werten des Polyvinyllactams, über dem Polyvinyllactam-Gehalt von durch Lösungspolymerisation zugänglichen wässrigen Polyvinyllactam-Lösungen liegt. Bei den erfindungsgemäß zugänglichen wässrigen Polyvinyllactam-Dispersionen ist häufig ein Polyvinyllactam-Gehalt zugänglich, der bei gleicher Viskosität und gleichen K-Werten des Polyvinyllactams, um ≥ 2 Gew.-%, ≥ 3 Gew.-%, ≥ 4 Gew.-%, ≥ 5 Gew.-%, ≥ 7 Gew.-%, ≥ 10 Gew.-% oder ≥ 15 Gew.-% über dem Polyvinyllactam-Gehalt der durch Lösungspolymerisation zugänglichen Polyvinyllactam-Lösung liegt. Durch das erfindungsgemäße Verfahren wird darüber hinaus eine bessere Durchmischung des niedrigviskoseren Polymerisationsmediums und damit verbunden eine höhere N-Vinyllactam-Umsatzrate sowie eine bessere Abfuhr der Polymerisationswärme pro Zeiteinheit erzielt. Auch weisen die nach dem erfindungsgemäßen Verfahren zugänglichen Polyvinyllactame eine geringere Polydispersität (Mw/Mn) im Vergleich zu den über eine Lösungspolymerisation zugänglichen Polyvinyllactame bei gleich hohen Polyvinyllactam-Gehalten auf.

Von Bedeutung ist, dass die erfindungsgemäß zugänglichen Polyvinyllactame in Form ihrer Wasser-in-Wasser-Dispersionen oder in Form ihrer Polymerpulver vorteilhaft als Komponente in Pharma- oder Kosmetikprodukten, in Klebstoffen, Wärmeträgerflüssigkeiten, in Beschichtungs-, Verdicker-, Adsorber-, Bindemittel-, Waschmittel-, Kunststoff-, Keramik-, Kühlmittel-, Tinten- oder Pigmentformulierungen sowie in Metallquenchbädern eingesetzt werden können. Insbesondere vorteilhaft lassen sich die erfindungsgemäß zugänglichen wässrigen Polyvinyllactam-Dispersionen als Komponenten in Klebestiften oder in Metallquenchbädern einsetzen.

Die Verwendung von Polyvinyllactam-Lösungen, insbesondere PVP-Lösungen, als Komponente in wässrigen Metallquenchbädern ist bekannt (siehe hierzu beispielsweise die Schriften US-A 3902929, US-A 4528044, US-A 4738731, DE-A 3345253, DE-A 3345254, DE-A 4415098, EP-A 218677 oder JP-A 62170415. Für die Verwendung von PVP in wässrigen Metallquenchbädern ist von Bedeutung, dass sich durch Einstellung der PVP-Konzentration und des mittleren PVP-Molekulargewichtes die Kühlraten der Quenchbäder gezielt einstellen lassen. Dabei ist es dem Fachmann geläufig, welche PVP-Konzentration und welches mittleres PVP-Molekulargewicht bzw. welcher K-Wert des PVPs für ein spezielles Metallkühlproblem insbesondere geeignet sind. Häufig wird für Metallquenchbäder PVP mit K-Werten von ≥ 30 bis ≤ 110, insbesondere mit K-Werten von ≥ 30, ≥ 60 oder ≤ 90 eingesetzt. Die PVP-Konzentrationen in den wässrigen Metallquenchbädern liegt oft im Bereich von ≥ 1 bis ≤ 30 Gew.-%, bezogen auf die Gesamtmenge des Metallquenchbads.

Insbesondere bei der Neuformulierung der wässrigen Metallquenchbäder sowie bei der Nachdosierung von PVP bei benutzten Metallquenchbädern vereinfacht sich bei Verwendung der erfindungsgemäßen niedrigviskosen aber gleichzeitig hochkonzentrierten wässrigen PVP-Dispersionen der Dosier- und der Durchmischungsvorgang, denn die niedrigviskosen PVP-Dispersionen können fein dosiert zugegeben und leicht homogen verteilt werden. Dabei ergibt sich beim Kontakt mit der schon vorhandenen PVP-Lösung bzw. bei der Neuformulierung des Metallquenchbades mit Wasser durch Verdünnungseffekte automatisch eine höherviskose PVP-Lösung mit homogener PVP-Verteilung.

Auch für die Herstellung von festen Klebstoffformulierungen für Klebstifte sind die erfindungsgemäß zugänglichen wässrigen Polyvinyllactam-Dispersionen, insbesondere die PVP-Dispersionen, sehr gut geeignet. Die Verwendung von PVP in Klebstoffformulierungen ist dem Fachmann bekannt (siehe hierzu beispielsweise die Schriften US-A 3576776, US-A 4750482, US-A 5338814 oder WO 98/47953). Häufig wird PVP mit K-Werten von ≥ 30 bis ≤ 110, oft von ≥ 60 bis ≤ 100 oder von ≥ 75 bis ≤ 95 zur Herstellung von Klebestiften eingesetzt.

Die Klebstiftformulierungen werden hergestellt, indem die einzelnen Komponenten, insbesondere Wasser, Feuchthaltemittel, Geliermittel, der eigentliche Klebstoff sowie übliche Hilfsstoffe, beispielsweise Weißpigment (Titandioxid), Riechstoffe, Antioxidantien, Konservierungsmittel etc. homogen gemischt werden. Der Gehalt an PVP als Klebstoff beträgt in der Regel zwischen 20 und 40 Gew.-%, bezogen auf die Gesamtmenge der Klebstoffformulierung. Häufig werden zur Herstellung der Klebstoffformulierungen wässrige PVP-Lösungen eingesetzt. Insbesondere bei Klebstoffformulierungen mit hohen PVP-Gehalten bei gleichzeitig hohen K-Werten des PVPs reichen jedoch die PVP-Gehalte der durch Lösungspolymerisation aufgrund der Lösungsviskosität im PVP-Gehalt begrenzten zugänglichen PVP-Lösungen hierfür nicht mehr aus. In diesen Fällen behilft man sich häufig dergestalt, dass zur Herstellung der Klebstoffformulierung neben einer wässrigen PVP-Lösung auch noch PVP-Pulver, welche mittels energie- und damit kostenintensiven Trocknungsprozessen, insbesondere einem Sprühtrocknungs- oder Gefriertrocknungsprozess, der wässrigen PVP-Lösungen zugänglich sind, mit identischem oder verschiedenem K-Wert verwendet wird. Problematisch dabei ist jedoch, dass die homogene Einarbeitung des PVP-Pulvers in die Klebstoffformulierung, aufgrund der sehr hohen Viskositäten apparativ schwierig und darüber hinaus sehr zeitaufwendig ist.

Insbesondere vorteilhaft sind Klebstoffformulierungen, welche eine wässrige Polyvinyllactam-Dispersion mit einem Polyvinyllactamfeststoffgehalt ≥ 25 Gew.-% bei einem K-Wert des Polyvinyllactams von ≥ 60 bis ≤ 100 enthalten.

Eine für Klebstifte typische Klebstoffformulierung setzt sich häufig zusammen aus

| | |
|---|---|
| 20 bis 40 Gew.-% | PVP sowie ggf. weitere Klebstoffkomponenten |
| 20 bis 70 Gew.-% | entionisiertes Wasser |
| 5 bis 15 Gew.-% | Geliermittel |
| 2 bis 15 Gew.-% | Feuchthaltemittel sowie |
| 0 bis 15 Gew.-% | weitere Additive, wie beispielsweise, Farbpigmente, Antioxidantien, Riechstoffe oder Konservierungsmittel |

Durch Verwendung der erfindungsgemäß zugänglichen, hochkonzentrierten wässrigen PVP-Dispersionen kann bei der Herstellung von Klebstoffformulierungen auf den Einsatz von wässrigen PVP-Lösungen und PVP-Pulvern, welche beispielsweise aus den PVP-Lösungen durch einen Trocknungsprozeß, beispielsweise einer Sprüh- oder Gefriertrocknung, zugänglich sind, und deren Abmischung verzichtet und somit der Herstellprozess vereinfacht werden.

Durch das erfindungsgemäße Verfahren sind hochkonzentrierte Wasser-in-Wasser-Dispersionen von Polyvinyllactamen mit K-Werten ≥ 30 und ≤ 110 mit guten Raum-Zeit-Ausbeuten zugänglich. Diese Dispersionen sind trotz ihres hohen Polyvinyllactam-Gehalts niedrigviskos und weisen darüber hinaus keine bis vernachlässigbar geringe Gelgehalte auf. Die wässrigen Polyvinyllactam-Dispersionen sind vielfältig einsetzbar. Insbesondere bei Verwendung dieser wässrigen Dispersionen als Formulierungsbestandteil können hohe Polyvinyllactam-Mengen in die Formulierungen eingearbeitet werden, ohne dass auf die kostenintensive Abmischung von wässrigen Polyvinyllactam-Lösungen mit pulverförmigem Polyvinyllactam zurückgegriffen werden muss.

Die folgenden Beispiele sollen die Erfindung erläutern, ohne diese jedoch einzuschränken.

### Beispiele

### Analytik

Die K-Wertbestimmung nach Fikentscher erfolgte bei 25 °C mittels einer 5 gew.-%igen Lösung von Natriumchlorid in entionisiertem Wasser mit einem Gerät der Fa. Schott, Mainz (Kapillare: Mikro-Ostwald; Typ: MO-Ic). Die wässrige Polyvinyllactamdispersion und die 5 gew.-%ige wässrige Natriumchloridlösung wurden dabei derart gemischt, dass die resultierende homogene Lösung einen Polyvinyllactamgehalt von 0,1 g pro 100 ml 5 gew.-%ige wässrige Natriumchloridlösung aufwies.

Der Polyvinyllactamgehalt der wässrigen Polyvinyllactamdispersion wurde bestimmt, indem eine aliquote Menge der wässrigen Polyvinyllactamdispersion in einem Trockenschrank bei 140 °C bis zur Gewichtskonstanz getrocknet wurde. Der Polyvinyllactamgehalt errechnet sich aus dem korrigierten Trockenrückstand, bezogen auf die zur Trocknung eingesetzte aliquote Menge der wässrigen Polyvinyllactamdispersion. Unter korrigiertem Trockenrückstand wird der nach der Trocknung erhaltene Trockenrückstand, abzüglich der in der zur Trocknung eingesetzten aliquoten Menge der wässrigen Polyvinyllactamdispersion neben dem Polyvinyllactam enthaltenen Hilfsstoffen, wie Radikalinitiatormenge, Menge an Schutzkolloid, organischen oder anorganischen Salzen sowie ggf. weiteren Hilfsstoffen, verstanden.

Die Viskositätsbestimmung der erhaltenen wässrigen Polyvinyllactamdispersion erfolgte nach ISO 2555 bei 25 °C mit einem Brookfield Gerät, Model DV-II mit Spindel 4 bei einer Drehzahl von 10 Umdrehungen pro Minute.

### Beispiel 1

In einem 1,5 l-Polymerisationsreaktor mit Anker-Rührer wurden bei 20 bis 25 °C (Raumtemperatur)

| | |
|---|---|
| 431 g | entionisiertes Wasser |
| 80 g | Natriumsulfat (wasserfrei, Fa. Merck, Darmstadt) |
| 177 g | einer 22,5 gew.-%igen wässrigen Lösung eines Copolymers (aus Acrylsäure und Vinylformamid im Mengenverhältnis 3 : 7, mit anschließender Hydrolyse der Formamidgruppen und Neutralisation der Carbonsäuregruppen mittels wässriger Natriumhydroxid-Lösung, einem gewichtsmittleren Molekulargewicht von ca. 300000 g/mol [polymeres Dispergiermittel A]) |

vorgelegt. Anschließend wurde mit einer 5 gew.-%igen wässrigen Lösung von Schwefelsäure der pH-Wert dieser Reaktionsmischung auf 6,8 eingestellt und danach diese Reaktionsmischung unter Rühren (160 U/min) und Stickstoffatmosphäre auf 60 °C aufgeheizt. Nach Erreichen von 60 °C wurden unter Rühren und Beibehaltung der Reaktionstemperatur 10 Gew.-% der nachfolgend beschriebenen Zuläufe I und II zu der Reaktionsmischung zugegeben und 5 Minuten unter vorgenannten Bedingungen gerührt.

Danach wurden dem Reaktionsgemisch unter Rühren und Beibehaltung der Reaktionstemperatur gleichzeitig beginnend, die Restmengen der Zuläufe I und II innerhalb zwei Stunden mit gleichbleibenden Zulaufströmen zudosiert. Nach Beendigung der Zuläufe I und II wurde noch drei Stunden bei 60 °C nachpolymerisiert.

Anschließend wurde die Reaktionsmischung auf 75 °C aufgeheizt. Danach wurde diesem Polymerisationsgemisch Zulauf III auf einmal zugegeben und für weitere zwei Stunden unter Rühren bei dieser Temperatur belassen. Anschließend wurde die Polymerdispersion auf Raumtemperatur abgekühlt.

### Zulauf I:

| | |
|---|---|
| 320 g | N-Vinyl-2-pyrrolidon (der Fa. BASF AG, Ludwigshafen) |

Zulauf II war eine wässrige Lösung bestehend aus:

| | |
|---|---|
| 0,5 g | 2,2'-Azo-bis-(2-methylpropionamidin)dihydrochlorid (V-50, der Fa. Wako Chemicals GmbH, Neuss) |
| 47,5 g | entionisiertes Wasser |

Zulauf III war eine wässrige Lösung bestehend aus:

| | |
|---|---|
| 1 g | V-50 |
| 9 g | entionisiertes Wasser |

Der K-Wert des erhaltenen PVPs wurde zu 77, die Viskosität der erhaltenen wässrigen Dispersion zu 1,5 Pas und der PVP-Gehalt der wässrigen Dispersion zu 30 Gew.-% bestimmt.

### Beispiel 2

Die Herstellung von Beispiel 2 erfolgte analog Beispiel 1, mit der Ausnahme dass folgende Rohstoffe bzw. Rohstoffmengen eingesetzt wurden.

### Vorlage:

| | |
|---|---|
| 421 g | entionisiertes Wasser |
| 91,2 g | Trinatriumcitrat-Dihydrat (der Fa. Fluka AG, Deutschland) |
| 177 g | polymeres Dispergiermittel A |

### Zulauf I:

| | |
|---|---|
| 320 g | N-Vinyl-2-pyrrolidon |

Zulauf II war eine wässrige Lösung bestehend aus:

| | |
|---|---|
| 0,5 g | V-50 |
| 47,5 g | entionisiertes Wasser |

Zulauf III war eine wässrige Lösung bestehend aus:

| | |
|---|---|
| 1 g | V-50 |
| 9 g | entionisiertes Wasser |

Der K-Wert des erhaltenen PVPs wurde zu 84, die Viskosität der erhaltenen wässrigen Dispersion zu 9,8 Pas und der PVP-Gehalt der wässrigen Dispersion zu 30,1 Gew.-% bestimmt.

### Beispiel 3

Die Herstellung von Beispiel 3 erfolgte analog Beispiel 1, mit der Ausnahme dass folgende Rohstoffe bzw. Rohstoffmengen eingesetzt wurden.

### Vorlage:

| | |
|---|---|
| 376 g | entionisiertes Wasser |
| 76,9 g | Tri-Natriumcitrat-Dihydrat |
| 95,9 g | einer 35,1 gew.-%igen wässrigen Lösung eines Copolymers (aus Maleinsäureanhydrid und Methylvinylether im Mengenverhältnis 1 : 1, mit anschließender vollständigen Hydrolyse der Anhydridgruppen und Neutralisation mittels wässriger Natriumhydroxid-Lösung, einem K-Wert vom 90 und einem gewichtsmittlerem Molekulargewicht von ca. 160000 g/mol) |

### Zulauf I:

| | |
|---|---|
| 270 g | N-Vinyl-2-pyrrolidon |

Zulauf II war eine wässrige Lösung bestehend aus:

| | |
|---|---|
| 0,9 g | V-50 |
| 64,5 g | entionisiertes Wasser |

Zulauf III war eine wässrige Lösung bestehend aus:

| | |
|---|---|
| 0,8 g | V-50 |
| 15 g | entionisiertes Wasser |

Der K-Wert des erhaltenen PVPs wurde zu 91, die Viskosität der erhaltenen wässrigen Dispersion zu 4 Pas und der PVP-Gehalt der wässrigen Dispersion zu 30,1 Gew.-% bestimmt.

### Beispiel 4

Die Herstellung von Beispiel 4 erfolgte analog Beispiel 1, mit der Ausnahme dass folgende Rohstoffe bzw. Rohstoffmengen eingesetzt und die Polymerisation und die Nachpolymerisation bei 80 °C durchgeführt wurden.

### Vorlage:

| | |
|---|---|
| 383 g | entionisiertes Wasser |
| 76,9 g | Tri-Natriumcitrat-Dihydrat |
| 89,1 g | einer 37,8 gew.-%igen wässrigen Lösung einer mit wässriger Natriumhydroxid-Lösung neutralisierten Polyacrylsäure mit einem K-Wert vom 80 und einem gewichtsmittlerem Molekulargewicht von ca. 100000 g/mol [polymeres Dispergiermittel B] |

### Zulauf I:

| | |
|---|---|
| 270 g | N-Vinyl-2-pyrrolidon |

Zulauf II war eine wässrige Lösung bestehend aus:

| | |
|---|---|
| 0,4 g | V-50 |
| 64,5 g | entionisiertes Wasser |

Zulauf III war eine wässrige Lösung bestehend aus:

| | |
|---|---|
| 0,8 g | V-50 |
| 15 g | entionisiertes Wasser |

Der K-Wert des erhaltenen PVPs wurde zu 96,7, die Viskosität der erhaltenen wässrigen Dispersion zu 4,2 Pas und der PVP-Gehalt der wässrigen Dispersion zu 30,3 Gew.-% bestimmt.

### Beispiel 5

Die Herstellung von Beispiel 5 erfolgte analog Beispiel 1, mit der Ausnahme dass folgende Rohstoffe bzw. Rohstoffmengen eingesetzt wurden.

### Vorlage:

| | |
|---|---|
| 282 g | entionisiertes Wasser |
| 91,9 g | Trinatriumcitrat-Dihydrat |
| 142 g | polymeres Dispergiermittel B |

### Zulauf I:

| | |
|---|---|
| 430 g | N-Vinyl-2-pyrrolidon |

Zulauf II war eine wässrige Lösung bestehend aus:

| | |
|---|---|
| 1,3g | V-50 |
| 102 g | entionisiertes Wasser |

Zulauf III war eine wässrige Lösung bestehend aus:

| | |
|---|---|
| 1,3 g | V-50 |
| 25 g | entionisiertes Wasser |

Der K-Wert des erhaltenen PVPs wurde zu 96, die Viskosität der erhaltenen wässrigen Dispersion zu 88 Pas und der PVP-Gehalt der wässrigen Dispersion zu 40,1 Gew.-% bestimmt.

### Beispiel 6

Die Herstellung von Beispiel 6 erfolgte analog Beispiel 1, mit der Ausnahme dass folgende Rohstoffe bzw. Rohstoffmengen (Gesamtmenge an Zulauf I wurde in der Vorlage vorgelegt) eingesetzt wurden.

### Vorlage:

| | |
|---|---|
| 450 g | entionisiertes Wasser |
| 91,2 g | Trinatriumcitrat-Dihydrat |
| 177 g | polymeres Dispergiermittel A |
| 320 g | N-Vinyl-2-pyrrolidon |

Zulauf II war eine wässrige Lösung bestehend aus:

| | |
|---|---|
| 1,0 g | V-50 |
| 8,6 g | entionisiertes Wasser, |

welche innerhalb von 10 Sekunden zudosiert wurde.

Zulauf III war eine wässrige Lösung bestehend aus:

| | |
|---|---|
| 1,9 g | V-50 |
| 17,3 g | entionisiertes Wasser |

Der K-Wert des erhaltenen PVPs wurde zu 82, die Viskosität der erhaltenen wässrigen Dispersion zu 16 Pas und der PVP-Gehalt der wässrigen Dispersion zu 30,1 Gew.-% bestimmt.

### Vergleichsbeispiel

Die Herstellung des Vergleichsbeispiels erfolgte analog Beispiel 1, mit der Ausnahme, dass kein Natriumsulfat eingesetzt wurde.

Der Versuch musste nach Zugabe von ca. 210 g N-Vinyl-2-pyrrolidon infolge der resultierenden zu hohen Viskosität abgebrochen werden.

## Patentansprüche

1. Verfahren zur Herstellung einer Wasser-in-Wasser-Dispersion von Polyvinyllactam mit einem K-Wert von ≥ 30 und ≤ 110 durch radikalisch initiierte Polymerisation wenigstens eines N-Vinyllactams der allgemeinen Formel I 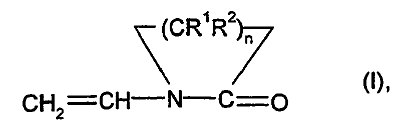 mit
R¹, R² unabhängig voneinander Wasserstoff und/oder C₁-C₈-Alkyl,
n gleich einer ganzen Zahl von 2 bis 8,
in einem wässrigen Reaktionsmedium,
**dadurch gekennzeichnet, dass** das zur Polymerisation eingesetzte wenigstens eine N-Vinyllactam I zu wenigstens 50 Gew.-% aus N-Vinyl-2-pyrrolidon (R¹ und R² gleich Wasserstoff, n gleich 3) besteht und die radikalisch initiierte Polymerisation des wenigstens einen N-Vinyllactams I in Gegenwart von
a) 1 bis 100 Gew.-% der Sättigungsmenge im wässrigen Reaktionsmedium wenigstens eines organischen oder anorganischen Salzes,
b) 0,1 bis 30 Gew.-% wenigstens eines Schutzkolloids, bezogen auf die Gesamtmenge des zur Polymerisation eingesetzten wenigstens einen N-Vinyllactams I, sowie
c) 0,01 bis 3 Gew.-% wenigstens eines Radikalinitiators, bezogen auf die Gesamtmenge des zur Polymerisation eingesetzten wenigstens einen N-Vinyllactams I
erfolgt, und dabei die Reaktionsbedingungen so gewählt werden, dass während der Polymerisationsreaktion wenigstens eine Teilmenge des wenigstens einen N-Vinyllactams I und des daraus durch Polymerisation gebildeten Polyvinyllactams im wässrigen Reaktionsmedium als separate Phase vorliegen.

2. Verfahren nach Anspruch 1, **dadurch gekennzeichnet, dass** zur Polymerisation ≥ 20 Gew.-% des wenigstens einen N-Vinyllactams I, bezogen auf die Gesamtmenge der resultierenden wässrigen Polyvinyllactam-Dispersion, eingesetzt werden.

3. Verfahren nach einem der Ansprüche 1 oder 2, **dadurch gekennzeichnet, dass** die Polymerisation nach der Zulauffahrweise erfolgt.

4. Verfahren nach Anspruch 3, **dadurch gekennzeichnet, dass** wenigstens eine Teilmenge des wenigstens einen organischen oder anorganischen Salzes und des wenigstens einen Schutzkolloids sowie gegebenenfalls eine Teilmenge des wenigstens einen Radikalinitiators und/oder des wenigstens einen N-Vnyllactams I im wässrigen Reaktionsmedium vorgelegt und unter Polymerisationsbedingungen die gegebenenfalls verbliebenen Restmengen des wenigstens einen organischen oder anorganischen Salzes und des wenigstens einen Schutzkolloids sowie die Gesamtmenge bzw. gegebenenfalls verbliebene Restmenge des wenigstens einen Radikalinitiators und/oder des wenigstens einen N-Vinyllactams I kontinuierlich zudosiert werden.

5. Verfahren nach einem der Ansprüche 1 bis 4, **dadurch gekennzeichnet, dass** die Gesamtmenge des wenigstens einen N-Vinyllactams I bis zu einem Umsatz von ≥ 90 Gew.-% polymerisiert wird.

6. Verfahren nach Anspruch 5, **dadurch gekennzeichnet, dass** dem Polymerisationsgemisch zur Vervollständigung der Polymerisation unter Polymerisationsbedingungen zusätzlich 0,05 bis 1,5 Gew.-%, bezogen auf die Gesamtmenge des zur Polymerisation eingesetzten wenigstens einen N-Vinyllactams I, wenigstens eines Radikalinitiators zudosiert werden.

7. Verfahren nach einem der Ansprüche 1 bis 6, **dadurch gekennzeichnet, dass** das zur Polymerisation eingesetzte wenigstens eine N-Vinyllactam I ausschließlich N-Vinyl-2-pyrrolidon ist.

8. Verfahren nach einem der Ansprüche 1 bis 7, **dadurch gekennzeichnet, dass** als wenigstens ein Schutzkolloid ein anionisches oder kationisches Schutzkolloid eingesetzt wird.

9. Verfahren nach einem der Ansprüche 1 bis 8, **dadurch gekennzeichnet, dass** als wenigstens ein Salz das Salz einer organischen C₁- bis C₁₅-Carbonsäure eingesetzt wird.

10. Wässrige Polyvinyllactam-Dispersion erhältlich nach einem Verfahren gemäß einem der Ansprüche 1 bis 9.

11. Verwendung einer wässrigen Polyvinyllactam-Dispersion gemäß Anspruch 10 als Komponente in Pharma- oder Kosmetikprodukten, in Klebstoffen oder Wärmeträgerflüssigkeiten sowie in Beschichtungs-, Verdicker-, Adsorber-, Bindemittel-, Waschmittel-, Kunststoff-, Keramik-, Kühlmittel-, Tinten- oder Pigmentformulierungen.

12. Verwendung einer wässrigen Polyvinyllactam-Dispersion gemäß Anspruch 10 als Komponente im einem Metallquenchbad.

13. Metallquenchbad enthaltend eine wässrige Polyvinyllactam-Dispersion gemäß Anspruch 10.

14. Verwendung einer wässrigen Polyvinyllactam-Dispersion gemäß Anspruch 10 als Komponente in Klebstoffformulierungen für Klebestifte.

15. Klebstoffformulierung für Klebestifte enthaltend wässrige Polyvinyllactam-Dispersion gemäß Anspruch 10.

16. Klebstoffformulierung nach Anspruch 15, **dadurch gekennzeichnet, dass** die wässrige Polyvinyllactam-Dispersion einen Polyvinyllactamfeststoffgehalt ≥ 25 Gew.-% und das in der wässrigen Dispersion enthaltene Polyvinyllactam einen K-Wert von ≥ 60 bis ≤ 100 aufweist.

## Claims

1. A process for preparing a water-in-water dispersion of polyvinyllactam having a K value of ≥ 30 and ≤ 110 by free-radically initiated polymerization of at least one N-vinyllactam of general formula I 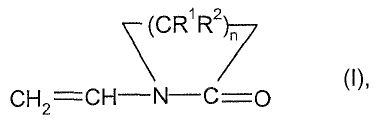 where
R¹ and R² independently of one another are hydrogen and/or C₁-C₈ alkyl and
n is an integer from 2 to 8,
in an aqueous reaction medium,
wherein said at least one N-vinyllactam I used for the polymerization is composed of at least 50% by weight of N-vinyl-2-pyrrolidone (R¹ and R² as hydrogen, n as 3) and the free-radically initiated polymerization of said at least one N-vinyllactam I takes place in the presence of
a) from 1 to 100% by weight, based on the saturation amount in the aqueous reaction medium, of at least one organic or inorganic salt,
b) from 0.1 to 30% by weight of at least one protective colloid, based on the total amount of said at least one N-vinyllactam I used for the polymerization, and
c) from 0.01 to 3% by weight of at least one free-radical initiator, based on the total amount of said at least one N-vinyllactam I used for the polymerization,
and the reaction conditions are chosen so that during the polymerization reaction at least a portion of said at least one N-vinyllactam I and of the polyvinyllactam formed therefrom by polymerization are present in the form of a separate phase in the aqueous reaction medium.

2. The process according to claim 1, wherein the polymerization is carried out using ≥ 20% by weight of said at least one N-vinyllactam I, based on the total amount of the resulting aqueous polyvinyllactam dispersion.

3. The process according to either of claims 1 and 2, wherein the polymerization takes place by the feed technique.

4. The process according to claim 3, wherein at least one portion of said at least one organic or inorganic salt and of said at least one protective colloid and also if appropriate a portion of said at least one free-radical initiator and/or of said at least one N-vinyllactam I are introduced as an initial charge in the aqueous reaction medium and under polymerization conditions the remainders if appropriate of said at least one organic or inorganic salt and of said at least one protective colloid and also the entirety or remainder if appropriate of said at least one free-radical initiator and/or of said at least one N-vinyllactam I are metered in continuously.

5. The process according to any one of claims 1 to 4, wherein the entirety of said at least one N-vinyllactam I is polymerized to a conversion of ≥ 90% by weight.

6. The process according to claim 5, wherein the polymerization is completed by metering additionally from 0.05 to 1.5% by weight, based on the total amount of said at least one N-vinyllactam I used for the polymerization, of at least one free-radical initiator into the polymerization mixture under polymerization conditions.

7. The process according to any one of claims 1 to 6, wherein said at least one N-vinyllactam I used for the polymerization is exclusively N-vinyl-2-pyrrolidone.

8. The process according to any one of claims 1 to 7, wherein as said at least one protective colloid an anionic or cationic protective colloid is used.

9. The process according to any one of claims 1 to 8, wherein as said at least one salt the salt of an organic C₁ to C₁₅ carboxylic acid is used.

10. An aqueous polyvinyllactam dispersion obtainable by a process according to any one of claims 1 to 9.

11. The use of an aqueous polyvinyllactam dispersion according to claim 10 as a component in drug or cosmetic products, in adhesives or heat transfer fluids, or in coating, thickener, adsorber, binder, laundry detergent, plastics, ceramics, refrigerant, ink or pigment formulations.

12. The use of an aqueous polyvinyllactam dispersion according to claim 10 as a component in a metal quenching bath.

13. A metal quenching bath comprising an aqueous polyvinyllactam dispersion according to claim 10.

14. The use of an aqueous polyvinyllactam dispersion according to claim 10 as a component in an adhesive formulation for gluesticks.

15. An adhesive formulation for gluesticks, comprising an aqueous polyvinyllactam dispersion according to claim 10.

16. An adhesive formulation according to claim 15, wherein the aqueous polyvinyllactam dispersion has a polyvinyllactam solids content ≥ 25% by weight and the polyvinyllactam present in the aqueous dispersion has a K value of ≥ 60 to ≤ 100.

## Revendications

1. Procédé de fabrication d'une dispersion eau-dans-l'eau de lactame polyvinylique avec un coefficient K ≥ 30 et ≤ 110 au moyen de la polymérisation initiée radicalement d'au moins un N-vinyllactame de formule générale I 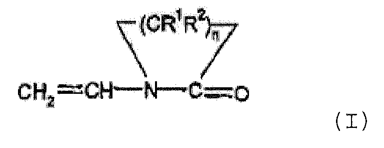 avec
R¹, R² représentant indépendamment l'un de l'autre un hydrogène et / ou alkyle en C₁ à C₈,
n égal à un nombre entier de 2 à 8,
dans un milieu réactionnel aqueux,
**caractérisé en ce que** le au moins un N-vinyllactame I mis en oeuvre pour la polymérisation soit constitué d'au moins 50 % en poids de N-vinyl-2-pyrrolidone (R¹ et R² étant un hydrogène, n égal à 3) et que la polymérisation initiée radicalement du au moins un N-vinyllactame I s'effectue en présence de :
a) 1 à 100 % en poids de la quantité de saturation en milieu réactionnel aqueux d'au moins un sel organique ou inorganique,
b) 0,1 à 30 % en poids d'au moins un colloïde protecteur, relativement à la quantité totale du au moins un N-vinyllactame I mis en oeuvre pour la polymérisation, ainsi que
c) 0,01 à 3 % en poids d'au moins un initiateur radicalaire, relativement à la quantité totale du au moins un N-vinyllactame I mis en oeuvre pour la polymérisation,
et que de ce fait les conditions réactionnelles sont choisies de telle sorte, que pendant la réaction de polymérisation au moins une partie du au moins un N-vinyllactame I et du lactame polyvinylique formé à partir de celui-ci par polymérisation soient présents comme phase séparée dans le milieu réactionnel aqueux.

2. Procédé selon la revendication 1, **caractérisé en ce que** pour la polymérisation sont mis en oeuvre ≥ 20 % en poids du au moins un N-vinyllactame I, relativement à la quantité totale de la dispersion aqueuse de lactame polyvinylique résultante.

3. Procédé selon l'une quelconque des revendications 1 ou 2, **caractérisé en ce que** la polymérisation s'effectue en mode continu.

4. Procédé selon la revendication 3, **caractérisé en ce que** au moins une partie du au moins un sel organique ou inorganique et du au moins un colloïde protecteur, ainsi qu'éventuellement une partie du au moins un initiateur radicalaire et / ou de l'au moins un N-vinyllactame I sont introduits dans le milieu réactionnel aqueux et, dans les conditions de polymérisation, les éventuelles quantités résiduelles restantes du au moins un sel organique ou inorganique et du au moins un colloïde protecteur, ainsi que la quantité totale respectivement l'éventuelle quantité résiduelle restante du au moins un initiateur radicalaire et / ou de l'au moins un N-vinyllactame I sont ajoutées goutte à goutte en continu.

5. Procédé selon l'une quelconque des revendications 1 à 4, **caractérisé en ce que** la quantité totale du au moins un N-vinyllactame I est polymérisée jusqu'à une conversion de ≥ 90 % en poids.

6. Procédé selon la revendication 5, **caractérisé en ce que** l'on ajoute de plus goutte à goutte au mélange de polymérisation jusqu'à complétion de la polymérisation dans des conditions de polymérisation 0,05 à 1,5 % en poids, relativement à la quantité totale du au moins un N-vinyllactame I mis en oeuvre pour la polymérisation, d'au moins un initiateur radicalaire.

7. Procédé selon l'une quelconque des revendications 1 à 6, **caractérisé en ce que** l'au moins un N-vinyllactame I mis en oeuvre pour la polymérisation est exclusivement la N-vinyl-2-pyrrolidone.

8. Procédé selon l'une quelconque des revendications 1 à 7, **caractérisé en ce que**, en tant qu'au moins un colloïde protecteur est mis en oeuvre un colloïde protecteur anionique ou cationique.

9. Procédé selon l'une quelconque des revendications 1 à 8, **caractérisé en ce que**, en tant qu'au moins un sel est mis en oeuvre le sel d'un acide carboxylique en C₁ à C₁₅ organique.

10. Dispersion aqueuse de lactame polyvinylique que l'on peut obtenir par un procédé selon l'une quelconque des revendications 1 à 9.

11. Utilisation d'une dispersion aqueuse de lactame polyvinylique selon la revendication 10 comme composant dans des produits pharmaceutiques ou cosmétiques, dans des colles ou des liquides caloporteurs ainsi que dans des formulation d'enduit, d'épaississant, d'adsorbant, de liant, de lessive, de plastique, de céramique, de refroidissant, d'encre ou de pigment.

12. Utilisation d'une dispersion aqueuse de lactame polyvinylique selon la revendication 10 comme composant dans un bain de trempe de métaux.

13. Bain de trempe de métaux contenant une dispersion aqueuse de lactame polyvinylique selon la revendication 10.

14. Utilisation d'une dispersion aqueuse de lactame polyvinylique selon la revendication 10 comme composant dans une formulation de colle pour des bâtons de colle.

15. Formulation de colle pour bâtons de colle contenant une dispersion aqueuse de lactame polyvinylique selon la revendication 10.

16. Formulation de colle selon la revendication 15, **caractérisée en ce que** la dispersion aqueuse de lactame polyvinylique présente une teneur en lactame polyvinylique solide ≥ 25 % en poids et le lactame polyvinylique contenu dans la dispersion aqueuse présente un coefficient K ≥ 60 à ≤ 100.
